# EUROPEAN PATENT APPLICATION

(11) **EP 4 653 182 A1**
(43) Date of publication of application: **26.11.2025**
(21) Application number: 25175961.9
(22) Date of filing: 13.05.2025
(51) Int. Cl.: B29C 73/24, B29C 65/74, B29C 65/00

(54) **METHOD AND SYSTEM FOR REPAIRING CONTAINERS**

(30) Priority: 23.05.2024 ES 202430414
(71) Applicant: Plastic Repair System 2011, S.L., 31007 Pamplona (Navarra) (ES)
(72) Inventor: URIBE PLAZA, Jose Ignacio, 31007 Pamplona (ES)
(74) Representative: Maslanka Kubik, Dorota Irena

(57) **Abstract**

The present invention relates to a method and system for repairing containers with a broken initial window (10). The method comprises:
- obtaining a donor window (16) with a hinge fold (12'), including an additional area (20) projecting beyond the hinge fold (12'), with a donor window welding contour (26) being defined at the edge of the additional area (20);
- conditioning the area of the initial window (10):
▪ by detaching the window if the window is not detached from the body of the container (4);
▪ by forming an additional space (24) next to the space of the initial window (10), generating a body welding contour (28) with the same shape as the donor window welding contour (26);

- incorporating the donor window (16) in the space of the initial window (10) and welding it to the body (4).

## Description

### FIELD OF THE ART

The present invention relates generally to the field of containers for the storage and transport of automotive products or other products and, more specifically, to the repair of containers.

### BACKGROUND OF THE INVENTION

Containers used for transporting cargo such as, for example, automotive products, are known in the art. Specifically, rectangular prismatic-shaped containers formed by coupling several pieces to one another (a base, a body and, optionally, a cover) are known according to the following characteristics:
- Base: The lower part of the container which supports the weight of the cargo. The base includes feet to support the container on the ground, leaving spaces that allow the access of the forks of a forklift for handling the container.
- Body: The part of the container laterally enclosing the cargo and defining the cargo volume of the container. The body together, with the base, forms the inner space of the container in which the cargo is housed.

The body is made of alveolar polypropylene and formed by four walls, said walls facing and being parallel to one another in twos, defining a closed rectangular contour; specifically a front wall, a rear wall facing the front wall, and two side walls facing one another.

The length of the container is defined by the length of the two longer facing walls, referred to as long walls; and the width of the container is defined by the length of the two shorter facing walls, referred to as short walls.

In one of the walls, for example, in a long wall, there is an opening in the form of a rectangular gap, and a window with the same dimensions as the gap, such that in a closed position, the window coincides with the gap, covering it. The window is attached to the rest of the body at its lower base, such that this attachment acts as a hinge, allowing the window to be vertically lowered. In a closed position, the window is arranged in the gap, preventing access to the inside of the container and, in an open position, the window is lowered through its lower base, leaving access to the inside of the container through the gap free.

According to a particular example, the window is made in the actual wall of the body by means of two parallel cuts starting from an upper edge of the body and prolonging vertically up to the same height, in which the lower ends of the cuts are defined. The hinge is formed by a folding line defined between the lower ends of the cuts. This folding line is referred to herein as a "hinge fold". The hinge fold is made by flattening the plastic, which allows the material to bend in that area, simulating a hinge. The making of the window in turn generates the gap. Securing means, for example, latches, are included to keep the window closed in the gap. There are also containers of this type the body of which has two windows. According to a particular example, the body has one window in each long wall.

The body is foldable through corner edges and, furthermore, there is a centered folding line in each of two facing walls, allowing the body to be folded, thereby reducing its volume. This is very useful, for example, for the empty transport thereof. According to the preceding particular example, there is a centered folding line in each short wall. In this particular example, the folding of the body is performed by introducing the folding lines of the short walls into the inner space of the body, while moving the long walls closer to one another at the same time.
- Cover: The piece that is located in the upper part of the container to cover the cargo and serves as a support when another container is to be placed thereon.

The body of the container, with all the folding lines and window(s), is made of a sheet-type piece, being closed annularly with a weld along the length of the height of the piece. Therefore, the body cannot be repaired when one of the parts of said body breaks. More specifically, in containers of this type, the windows often break at the area of the hinge fold due to fatigue from opening and closing, and the window may even become completely detached. Breakage of a container of this type leads to its disposal. These containers usually have a large size, so their disposal generates a significant environmental and economic impact, which may even be greater than the impact from actually making the container. The inventors proposed the possibility of repairing damaged containers instead of disposing them. These containers are used both for transporting cases of plastic bottles and for transporting many other goods, such as in the automotive sector, food sector, etc., so implementing a solution of this type entails a highly positive impact. Repairing these windows is a relevant technical challenge that fits into the general challenge for recovering plastic containers in a circular economy.

### SUMMARY OF THE INVENTION

The objective of the present invention is to enable the reuse of containers which, once the service life thereof has ended because they break and the window is missing, can no longer be used and become waste that is sent for recycling. To that end, strategy for recreating a new window like the initial one and for incorporating it in the body of the container is proposed, giving back its full functionality and strength, as if it were a new product.

The area of attachment between the new window and the corresponding wall of the body of the container cannot be repaired during use, since it requires the window to be able to be folded, and a conventional weld would leave said window rigid. More specifically, the problem of containers of this type is that once used in the factory, the body is disassembled, folded, and deposited on the base, thereby reducing its volume for the empty transport thereof. Any attempt to repair by conventional welding in the areas of the body where there are folding lines (for example, the hinge fold of the window) would leave the container inoperative, since the areas would be rigid and neither the window nor the rest of the body could be folded and unfolded.

After analyzing the subject, the inventors considered that, when repairing a container with the window broken, two main issues must be raised:
a) Obtaining a window with a completely new "hinge fold" area. This new window is referred to herein as a donor window, and the broken window is referred to herein as an initial window.
b) Arranging the donor window in the space of the initial window that remains after the initial window is detached from the body, welding the donor window to a part of the body of the container where there is no movement (i.e., in a rigid part of the corresponding wall).

Different options as to the origin of the material for making the donor windows were analyzed. Donor windows could be obtained by buying new sheets of said material. Donor windows could also be obtained from scrap bodies of other badly broken containers that can no longer be repaired again but had enough surface in good conditions so as to obtain one or more donor windows. This second option was chosen. In the context of the present invention, the term "scrap" is used to mean waste or junk, i.e., a piece that no longer serves its purpose, nor can it be repaired, and is used as a material for repairing other pieces.

In order to be able to weld the donor window to a part of the body of the container where there is no movement, it was decided that the donor window must have an area projecting beyond the hinge fold, referred to as additional welding area. This is a critical area, since the strength of the donor window attached to the body cannot be lower than that of the initial window. After several studies on different geometries, it was decided to define a welding contour (the donor window contour welded to the body) in the form of a curved path as it better distributes stresses when the container is subjected to cargo.

Once the geometry of the welding contour is selected, the inventors faced new issues such as, for example, the specific measurements of the radius of the welding contour, as well as the distance between the hinge fold and the maximum measurement of the edge of the welding contour (the farthest point of the curve with respect to the hinge fold), referred to herein as the "maximum distance". The question of whether is it better to maintain the maximum distance for any width of the window or to maintain the radius of the welding contour was also raised. Finally, it was decided to maintain the maximum distance for any case and to change the radius of the welding contour based on the width of the window. According to a particular embodiment, the maximum distance is 100 mm for any width of the window, and the radius of the welding contour is 950 mm for a window having a width of 850 mm; 500 mm for a window having a width of 600 mm.

Once the main issues of the repair strategy were resolved, the remaining issues surrounding the method were developed. Specifically, according to a first aspect, the present invention discloses a method for repairing containers of the type that are used for transporting cargo and comprise:
- a base supporting the weight of the cargo;
- a body, laterally enclosing the cargo and defining the cargo volume of the container, such that the body, together with the base, forms an inner space for housing the cargo;
- a gap located in a wall of the body, starting from an upper edge of the body;
- an initial window attached to the body by a fold acting as a hinge, referred to as hinge fold, such that the window, in a closed position, is arranged in the gap, preventing access to the inside of the container and, in an open position, is lowered through the hinge fold, leaving access to the inside of the container free;
with the particularity that the initial window in the container to be repaired is broken.

The method comprises the following actions:
- obtaining a new window with a hinge fold, referred to as a donor window, including an additional area projecting beyond the hinge fold, with a donor window welding contour being defined at the edge of the additional area;
- conditioning the area of the broken initial window by means of a method comprising the following actions:
   ▪ in the case where the initial window is not detached from the body, detaching the initial window from the body as a prior action;
   ▪ forming an additional space next to the space of the broken initial window, generating a body welding contour with the same shape as the donor window welding contour;
- incorporating the donor window in the space of the initial window and attaching it to the body of the container by welding the donor window welding contour to the body welding contour.

According to a particular embodiment, the containers to be repaired are made of alveolar polypropylene, with the donor window being obtained by means of a method comprising the following actions:
- obtaining a rectangular alveolar polypropylene sheet;
- sealing open borders of the sheet;
- making the hinge fold in a fringe of the sheet;
- forming a curve-shaped donor window welding contour.

According to another aspect, the present invention also provides a system for repairing containers of the type mentioned above, with the particularity that the initial window in the container to be repaired is broken. The system comprises:
- means for forming a new window with a hinge fold, referred to as a donor window, such that the donor window includes an additional area projecting beyond the hinge fold, with a donor window welding contour being defined at the edge of the additional area;
- means for forming an additional space in the body next to the space of the broken initial window, generating a body welding contour with the same shape as the donor window welding contour;
- means for incorporating the donor window in the space of the initial window and attaching it to the body of the container by welding the donor window welding contour to the body welding contour.

According to a particular embodiment, the means for forming a donor window comprise:
- a circular saw intended for making sheet-like cutouts from scrap material;
- two heated sealing profiles intended for acting, in an aligned manner, one at the upper part and the other one at the lower part of a border to be sealed, like a sandwich, applying pressure and heat, with the particularity that the shape of both profiles causes the border to be sealed completely when they are brought together;
- a heated hinging profile intended for acting on a fringe of a cutout, applying pressure and heat, such that the hinge fold of the donor window is formed by flattening the material of the cutout;
- a curve-shaped cutting blade intended for making the donor window welding contour.

According to a particular embodiment, the means for forming the additional space in the body comprise a curve-shaped cutting blade intended for making the body welding contour. According to one embodiment, the cutting blade that makes the body welding contour is the same cutting blade that makes the donor window welding contour.

According to a particular embodiment, the means for incorporating the donor window in the space of the initial window and attaching it to the body of the container comprise:
- means for advancing/pressing the body and the donor window;
- means for securing the body and the donor window;
- a heating plate with the same curved shape as the cutting blade that makes the donor window welding contour and the body welding contour;
- means for lifting/lowering the heating plate.

According to a particular embodiment:
- the means for advancing/pressing the body and the donor window comprise respective support platforms on which the respective body and the respective donor window are supported; and respective actuator cylinders controlling the movement of the respective support platforms;
- the means for securing the body and the donor window comprise respective hold-down platforms acting on the respective body and the respective donor window as a result of the action of respective actuator cylinders;
- the means for lifting/lowering the heating plate are formed by a plate actuator cylinder.

According to a particular embodiment:
- the circular saw is integrated in a machine of a scrap cutting station;
- the two heated sealing profiles and the heated hinging profile are integrated in a machine of a sealing and hinging station;
- the cutting blade is integrated in a machine of an additional cutting station;
- the support platforms, the hold-down platforms, the heating plate, the means for lifting/lowering the heating plate, and the actuator cylinders are integrated in a machine of a welding station.

According to a particular embodiment, the additional cutting station and the welding station each comprises:
- means for unfolding the body, intended for securing the body of the container by a wall opposite the gap, for lifting said wall such that the body is completely or partially unfolded, and for placing the body in the welding area of the machine, the means for unfolding the body comprising a vacuum suction cup hanging from a hoist;
- means for anchoring the body, intended for securing the body in a centered position, the means for anchoring comprising two laterally movable centering anchorings, one on each side of the machine of the corresponding station, each centering anchoring including a notch the width of which adapts to the thickness of the wall of the body.

The word "comprises" and variants thereof must be interpreted herein as open expressions that do not intend to exclude the possibility of other technical features or components in addition to those explicitly mentioned. Furthermore, the word "comprises" includes the case "consists of", being interpreted as a closed expression limited only to the technical features or components that are explicitly mentioned. For those skilled in the art, other objects, advantages, and features of the invention will be inferred in part from the description and in part from the practice of the invention. Furthermore, the present invention covers all the possible combinations of embodiments indicated herein.

### BRIEF DESCRIPTION OF THE DRAWINGS

The present invention will be better understood in reference to the following figures, in which the following is depicted in an illustrative and non-limiting manner:
- Figure 1: This figure shows a container object of repair of the present invention.
- Figure 2: This figure schematically depicts a scrap cutting station according to a particular embodiment of the present invention.
- Figure 3: This figure schematically depicts a scrap sheet (a)), and a sheet cut in half, with several donor window cutouts (b)).
- Figure 4: This figure schematically depicts a sealing and hinging station according to a particular embodiment of the present invention, prepared to act on a window cutout.
- Figure 5: This figure schematically depicts the sealing and hinging station of Figure 4, acting on two window cutouts.
- Figure 6: This figure shows an enlarged view of the sealing and hinging station, acting on two window cutouts.

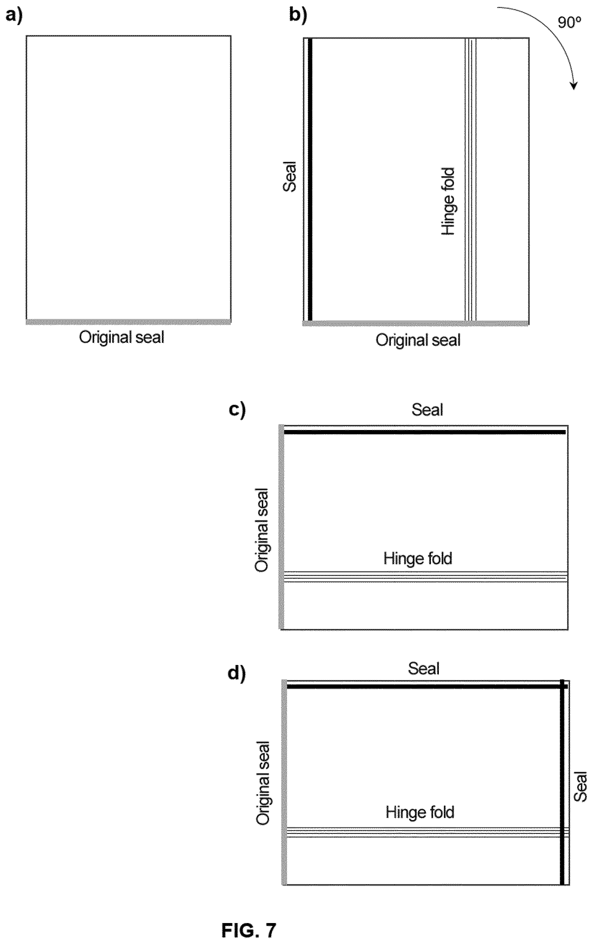

- Figure 7: This figure shows successive views of a window cutout in different manufacturing phases, during the passage thereof through the sealing and hinging station. a) Window cutout before passing through the sealing and hinging station. b) Window cutout after a first phase, in which a longitudinal border is sealed and the hinge fold is made. The curved arrow represents a 90° rotation imparted to the window cutout after it has gone through the first phase. c) Window cutout rotated 90° before being subjected to the second phase. d) Window cutout after the second phase in which a transverse border is sealed.
- Figure 8: This figure schematically depicts an additional cutting station according to a particular embodiment of the present invention.
- Figure 9: This figure shows an elevational plan profile view of a cutting blade according to a particular embodiment of the present invention.
- Figure 10: This figure schematically depicts a donor window after it has gone through the additional cutting station.
- Figure 11: This figure schematically depicts a container body after it has gone through the additional cutting station.
- Figure 12: This figure schematically depicts a welding station according to a particular embodiment of the present invention.
- Figure 13: This figure schematically depicts means for unfolding the body of the container, unfolding the body, according to a particular embodiment of the present invention. The means for unfolding are installed in a work station, which can be the additional cutting station and/or the welding station. Means for anchoring the body according to a particular embodiment of the present invention are depicted separately in the lower part of Figure 13.
- Figure 14: This figure schematically depicts the means for unfolding the body of Figure 13, at the time where the body of the container has moved to the machine.
- Figure 15: This figure schematically depicts the attachment process between the donor window and the body of the container.

### EMBODIMENTS OF THE INVENTION

The present invention discloses a method for repairing containers of the type that are used for transporting cargo such as, for example, automotive products, including a window for accessing the inside thereof, which is broken. Repair is performed in the area of the broken window, which is referred to as an initial window.

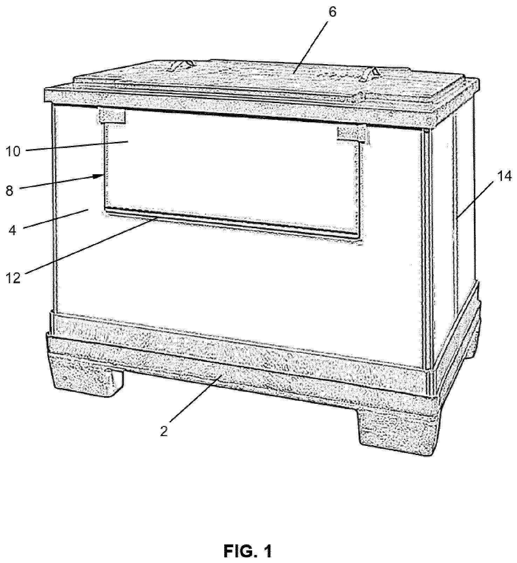

According to a particular embodiment, the containers object of repair of the present invention are the containers defined in the background of the invention, so all the corresponding information will not be repeated. However, some general features are included below to facilitate the reading of this section in reference to the figures: As shown in Figure 1, the containers object of repair comprise a base (2), a body (4) and, optionally, a cover (6). In a wall of the body (4) there is a gap (8) with an initial window (10) which, in a closed position, coincides with the gap (8), covering it. The window is attached to the rest of the body (4) at its lower base such that this attachment acts as a hinge, allowing the window to be vertically lowered. This attachment is referred to as a hinge fold (12). The body (4) is foldable through corner edges and, furthermore, in each of two facing walls there is a centered folding line (14), allowing the body (4) to be folded, thereby reducing its volume.

Generally, the method for repairing comprises the following actions:
- Obtaining a donor window (16). The donor window (16) is a new window with a hinge fold (12'), including an additional area (20) projecting beyond the hinge fold (12'), with a donor window welding contour (26) being defined at the edge of the additional area (20). The hinge fold (12') is a folding line along which the donor window (16) is attached to the body (4), and along which the window can be lowered.
- Conditioning the body (4) in the area of the space of the initial window (10), without the initial window (10), to receive the donor window (16). Conditioning involves forming an additional space (24) next to the space of the broken initial window (10), generating a body welding contour (28) with the same shape as the donor window welding contour (26).
- Attaching the donor window (16) to the body (4) of the container in the conditioned space of the initial window (10).

### Obtaining the donor window

Preferably, the donor window (16) is obtained by manufacturing it using a method comprising the following actions:
- Opening the closed contour of a scrap body of another container. According to a particular embodiment, the closed contour of the scrap body is opened by cutting it transversely along one of the folds (32) and is unfolded in the form of a sheet (34). The open scrap body can be cut transversely along another fold or other folds (32) to obtain two or more scrap parts, respectively.
   According to a particular embodiment, the transverse cut or cuts are made along the folds (32) of the scrap body in a scrap cutting station that includes a cutting bench with a circular saw (44). The cutting bench may include one or more moveable stops (48) for adjusting the required cutting measurements, and suction means for suctioning particles produced during cutting (such as chips, dust, etc.). To help in the handling of the scrap sheets (34), the scrap cutting station may include one or more benches with a ball-filled surface (50), allowing the sheets (34) to slide better.
- Making one or more rectangular cutouts (referred to as window cutouts (52)) in scrap areas that are in good conditions. The width of a window cutout (52) is the same as the width of the initial window (10). The length of the window cutout (52) is greater than the distance between the distal end and the proximal end of the initial window (10) (the hinge fold is located at the proximal end), in order to be able to make an additional welding area (20) projecting beyond the hinge fold (12') in a direction contrary to the distal end.
   According to a particular embodiment, the window cutout or cutouts (52) are made in a scrap cutting station comprising a cutting bench with a circular saw (44), preferably the same cutting station that makes the transverse cut or cuts along the folds (32) of the scrap body mentioned in the preceding section.
- Once the window cutout (52) has been obtained, there is a need to condition it to obtain the donor window (16). Several actions, such as sealing the borders, making the new hinge fold (12'), and forming the additional welding area (20), must be performed as explained below:
   ▪ Sealing the borders: Since the window is made of alveolar polypropylene (preferably, two 1 mm thick plates, one on each side, and half-spheres between the plates, arranged in non-corresponding rows distributed along the entire extension), it is necessary to seal the borders that are open, so that water, moisture, or dirt does not seep into the product. The border corresponding to the additional welding area (20) is not sealed, since it will be sealed later on when the donor window (16) is welded to the body (4) of the container. In certain occasions, a border can be sealed by the actual cutting action to obtain the window cutout (52), so in that case the sealing thereof is not necessary.

According to a particular embodiment, sealing is performed by applying pressure and heat, preferably by means of the joint action of two heated profiles (referred to as sealing profiles (66)) along the corresponding border, one of them acting on the upper part and the other one acting on the lower part of the border, like a sandwich. The shape of both profiles causes a rounded sealed border to be generated when they are brought together and heat is applied.
▪ Making the hinge fold (12'): The hinge fold (12') is made by flattening the alveolar polypropylene, allowing the material to be folded in the flattened area. According to a particular embodiment, the hinge fold (12') is made by applying pressure and heat, preferably by applying a heated profile (referred to as a hinging profile (80)) on a fringe of the window cutout (52). According to a particular embodiment, the seal and the hinge fold (12') are made in the same work station, referred to as a sealing and hinging station, preferably in a simultaneous manner. This work station includes an area in which the seal is made (by means of the aforementioned sealing profiles) and another area in which the hinge fold is made (by means of the aforementioned hinging profile (80)). The station may include one or more movable stops (82a, 82b) for adjusting the position of the scrap cutouts.
▪ Forming the additional welding area (20): This is a critical part since the strength of the area must be the same as that of the original. After several studies on different geometries, it is decided to define a welding contour (contour welded to the body (4), referred to as a donor window welding contour (26)) in the form of a curved path, as it better distributes stresses when the container is subjected to cargo.

According to one embodiment, the maximum distance (distance between the hinge fold (12') and the maximum measurement of the edge of the welding contour) is 100 mm for any width of the donor window, and the radius of the donor window welding contour (26) is: 950 mm for a donor window having a width of 850 mm; 500 mm for a donor window having a width of 600 mm.

According to a particular embodiment, the donor window welding contour (26) is formed by means of cutting as a result of the action of a curve-shaped cutting blade (92). According to a particular embodiment, the donor window welding contour (26) is formed in a cutting station, referred to as an additional cutting station. This station comprises the curve-shaped cutting blade (92) cutting the donor window welding contour (26) by acting vertically thereon. The station may include one or more movable stops (96a, 96b) for adjusting the position of the scrap cutouts.

### Conditioning the body in the area of the space of the initial window

The conditioning of the body (4) seeks to prepare the space in which the donor window (16) is welded. To that end, an additional welding space (24) is formed next to the space of the broken initial window (10), generating a contour (referred to as a body welding contour (28)) with the same shape as the donor window welding contour (26).
According to a particular embodiment, the body welding contour (28) is formed by means of cutting as a result of the action of a curve-shaped cutting blade (92). According to a particular embodiment, the body welding contour (28) is formed in a cutting station, preferably the same cutting station that makes the donor window welding contour (26) (i.e., the aforementioned additional cutting station).

Preferably, in the case where the window is broken but not detached from the body (4), the window is detached from the body (4) as a prior action, for example, by means of cutting. According to a particular embodiment, the window can be separated as a result of the same cutting action that forms the body welding contour (28).

According to a particular embodiment, the body (4) of the container is completely unfolded (i.e., forming the rectangular closed contour according to the use configuration) or partially unfolded when cutting of the welding contour is performed. In this way, the cutting blade (92) can be located in the inner space of the body (4) and act exclusively in the target area, without affecting other parts of the body (4). Unfolding is performed as follows: the wall of the gap (8) is placed horizontally, below the opposite wall (parallel wall facing the wall of the gap); and the opposite wall is lifted, such that the body (4) is completely or partially unfolded. Preferably, lifting is performed by means of a vacuum suction cup (102) acting on the opposite wall of the body (4). According to a particular embodiment, unfolding is performed before placing the body (4) of the container in the cutting area of the work station.

### Attaching the donor window to the body of the container in the space of the initial window

According to a particular embodiment, the attachment of the donor window (16) to the body (4) of the container is performed by welding. Preferably, welding is performed by pressure and heat. More preferably, welding is performed by means of a method comprising the following actions:
- Pressing the donor window welding contour (26) and the body welding contour (28) of the container against a heating plate (110) for such a time that the material in the welding contours (26, 28) melts partially. According to a particular embodiment, both welding contours (26, 28) are pressed against the heating plate (110) at the same time, with one of the contours acting on one side of the heating plate (110) and the other one acting on the opposite side of the heating plate (110), like a sandwich.
- Separating the welding contours (26, 28) from the heating plate (110).
- Pressing the donor window welding contour (26) and the body welding contour (28) of the container to one another for such a time that the material of the contours solidifies and the weld is formed.

According to a particular embodiment, the body (4) of the container is completely unfolded (i.e., forming the rectangular closed contour according to the use configuration) or partially unfolded when the attachment of the donor window (16) to the body (4) of the container is performed. In this way, the heating plate (110) can act exclusively in the target area, without affecting other parts of the container. Unfolding is performed as follows: the wall of the gap (8) is placed horizontally, below the opposite wall (parallel wall facing the wall of the gap); and the opposite wall is lifted, such that the container is completely or partially unfolded. Preferably, lifting is performed by means of a vacuum suction cup (102) acting on the opposite wall of the body (4).

According to a particular embodiment, the attachment of the donor window (16) to the body (4) of the container is performed in a welding station. The welding station comprises the heating plate (110); means for securing the body and the donor window; means for advancing/pressing the body and the donor window, which cause the body (4) and the donor window (16) to advance and to first press against the heating plate (110), and then against one another, to perform welding; means for lifting/lowering the heating plate. The means for securing, the means for advancing/pressing, and the means for lifting/lowering work as a result of the action of actuator cylinders.

According to a particular embodiment, unfolding is performed before placing the container in the welding area of the welding station.

According to another aspect, the present invention also provides a system for repairing containers. The system comprises several work stations:

### - Scrap cutting station:

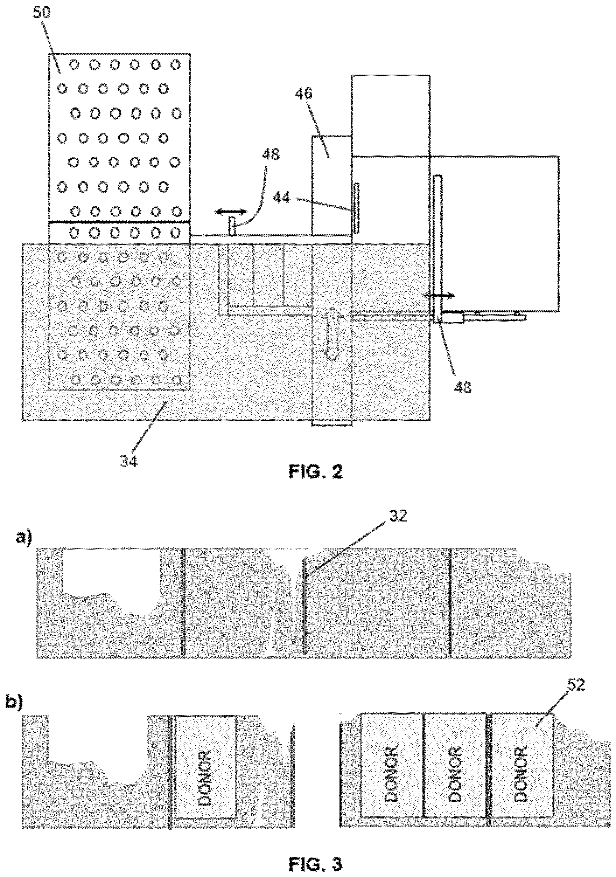

This station is made up of a machine that cuts scrap material for the donor windows. According to a particular embodiment shown in Figure 2, the machine is a cutting bench with a circular saw (44), with a transversely moveable frame (46), and several longitudinally movable stops (48) for adjusting the cutting measurements required, and suction means for suctioning particles releases during cutting (such as chips, dust, etc.). To help in the handling of the sheet (34), the scrap cutting station comprises two benches with a ball-filled surface (50) so that the sheet slides better.

The closed contour of the scrap body is opened in this station and one or more rectangular cutouts (referred to as window cutouts (52)) is made in scrap areas that are in good conditions, as explained above in reference to the method.

### - Sealing and hinging station:

This station is made up of a machine that seals the border(s) of the donor window (16) that may be open after it has gone through the cutting station, except the border corresponding to the additional welding area (20); and makes the hinge fold (12').

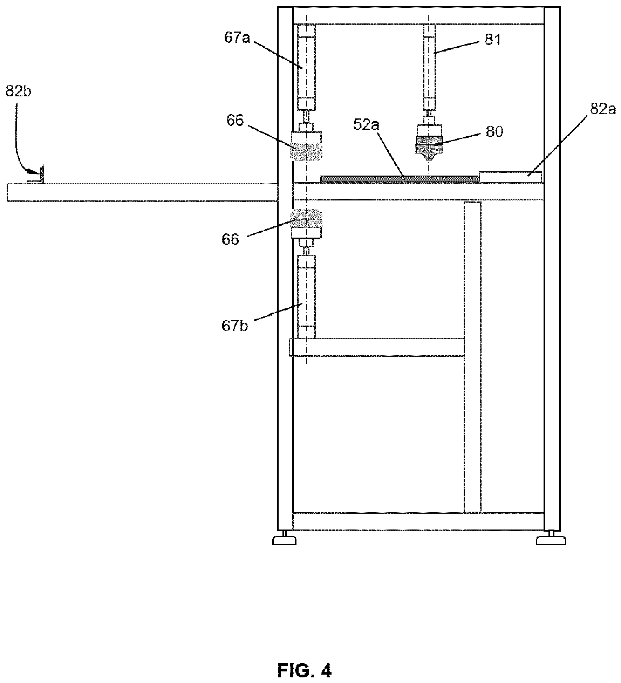

According to a particular embodiment shown in Figures 4, 5, and 6, the machine of the sealing and hinging station comprises a sealing area and a hinging area, as explained below:
▪ There are arranged in the sealing area two heated sealing profiles (66) which jointly apply pressure and heat along the border, with one of them acting vertically on the upper part of the border and the other one acting vertically on the lower part of the border, like a sandwich. According to a particular embodiment, each sealing profile (66) comprises a base body and a cover, as explained below:
   ➢ The base body includes a space in which a resistor that provides the heat required for sealing is housed. The base body includes an action face with a shape corresponding to half the outline of the border; specifically a channel in the shape of a quarter tube. This makes it possible for closing to be performed in half the thickness of the border. The shape of both sealing profiles (66) means that a rounded sealed border is generated when they are brought together and heat is applied.
      On the action face there is a recess with the following function: During sealing, part of the material of the border of the donor window (16) is forced to enter the recess. In this way, sealing is effective and closure of the border is ensured. As a result, burrs, that are cut away once the window is completed in order to leave a correct measurement, are generated.
      According to a particular embodiment, the action face includes a channel on each side end in the shape of half the outline of the border (i.e., in the shape of a quarter tube), and a corresponding recess. As a result thereof, a border of one sheet and a border of another different sheet can be sealed between the two sealing profiles (66).
   ➢ The cover closes the space in which the resistor is housed, on the side opposite the side of the action face. Preferably, an insulating gasket made of rubber or another material is arranged between the cover and the base body. According to a particular example, the cover is attached to the base body by means of nuts and bolts.
▪ There is arranged in the hinging area a heated hinging profile (80) that applies pressure and heat along the rectangular scrap cutout, acting vertically thereon.

According to a particular embodiment, the hinging profile (80) comprises a base body and a cover, as explained below:
➢ The base body includes a space in which a resistor that provides the heat required for sealing is housed. The base body includes an action face with a central area projecting from the sides, with the sides having angled shapes. This shape of the action face allows reducing the total thickness of the sheet so that it can work like a plastic strip, and so that the rest of the material of the sheet can flow through the angled sides, all this contributing to the area resulting from the application of the hinging profile (80) being able to be folded, behaving like a hinge.
➢ The cover closes the space in which the resistor or resistors are housed on the side opposite the side of the action face. Preferably, an insulating gasket made of rubber or another material is arranged between the cover and the base body. According to a particular example, the cover is attached to the base body by means of nuts and bolts.

The station may include one or more movable stops (82a, 82b) for adjusting the position of the scrap cutouts.

### - Additional cutting station:

This station is made up of a machine that prepares both the body (4) and the donor window (16) to enable welding to be performed with the curved shape designed to that end.

Specifically, the machine makes a curve cut, both at one end of the donor window (16), and on the body (4) in an area adjacent to the gap (8), with the same radius so that both surfaces coincide (the operations are performed separately in the donor window (16) and in the body (4)).

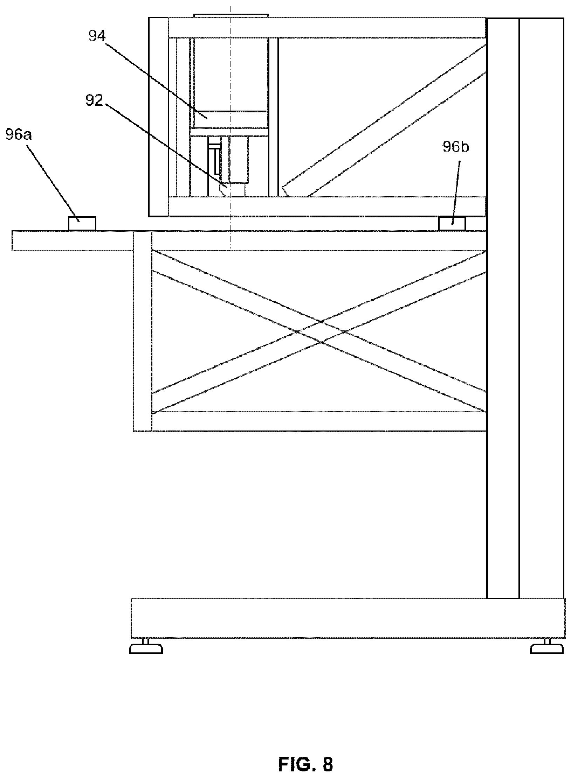

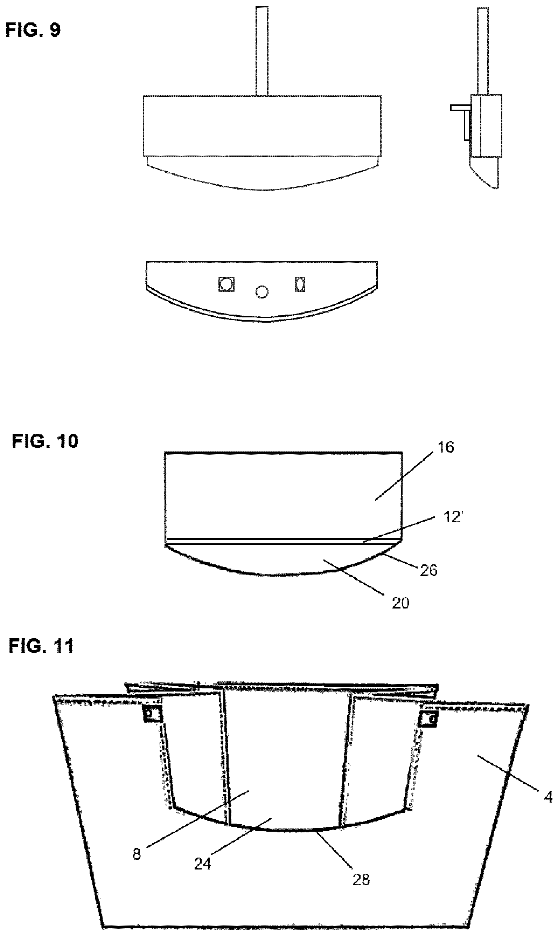

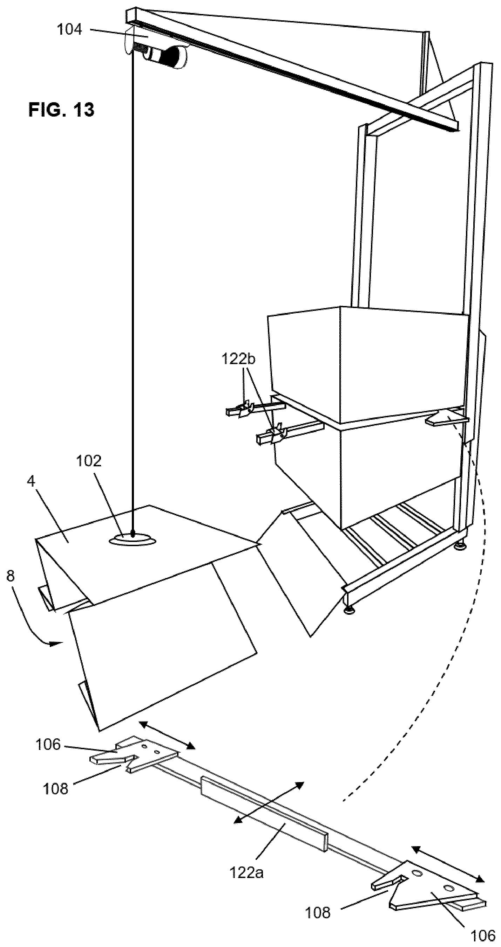

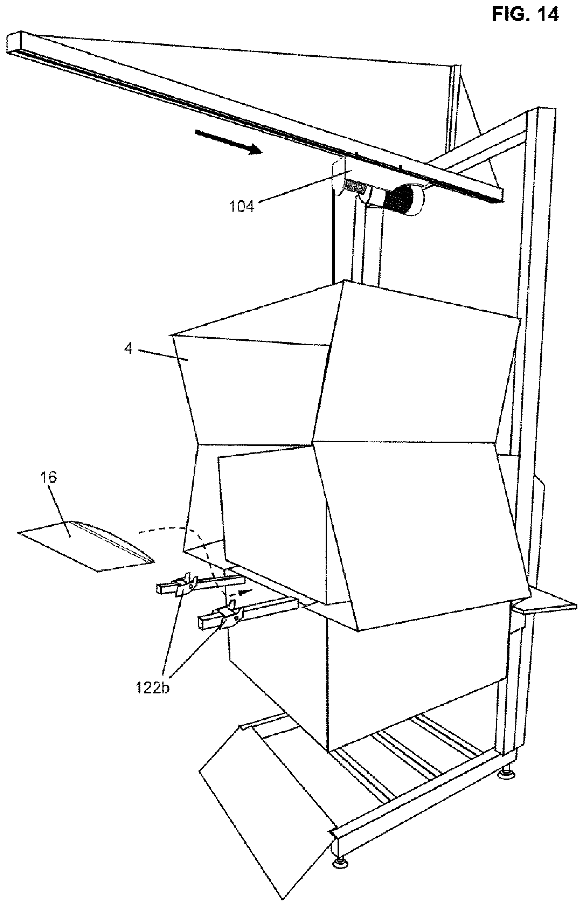

According to a particular embodiment shown in Figure 8 , the machine of the additional cutting station comprises a cutting blade (92), a blade actuator cylinder (94), one or more longitudinally moveable stops (96a, 96b); means for unfolding the body, and means for anchoring the body, as explained below:
▪ The cutting blade (92) has a curved shape (see Figure 9). It moves up and down as a result of the action of the blade actuator cylinder (94);
▪ The movable stop or stops (96a, 96b) allow adjusting the cutting measurements required. Preferably, there is a specific stop for the donor window and a specific stop for the body;
▪ The means for unfolding the body are intended for securing the body (4) of the container by the wall opposite the gap (8), for lifting said wall such that the body (4) is completely or partially unfolded, and for placing the body (4) in the cutting area of the machine, prepared to be cut by the blade in the area of the gap (8). Preferably, the means for unfolding the body comprise a vacuum suction cup (102) hanging from a hoist (104), as shown in Figures 13 and 14.
▪ The means for anchoring the body allow securing the body (4) in a centered position for cutting. Preferably, the means for anchoring comprise two laterally movable centering anchorings (106), one on each side of the machine, as shown in Figure 13. Each centering anchoring (106) includes a notch (108) the width of which adapts to the thickness of the wall of the body.

### - Welding station:

This station is made up of a machine that welds the donor window (16) to the body (4) in which its window is broken or missing.

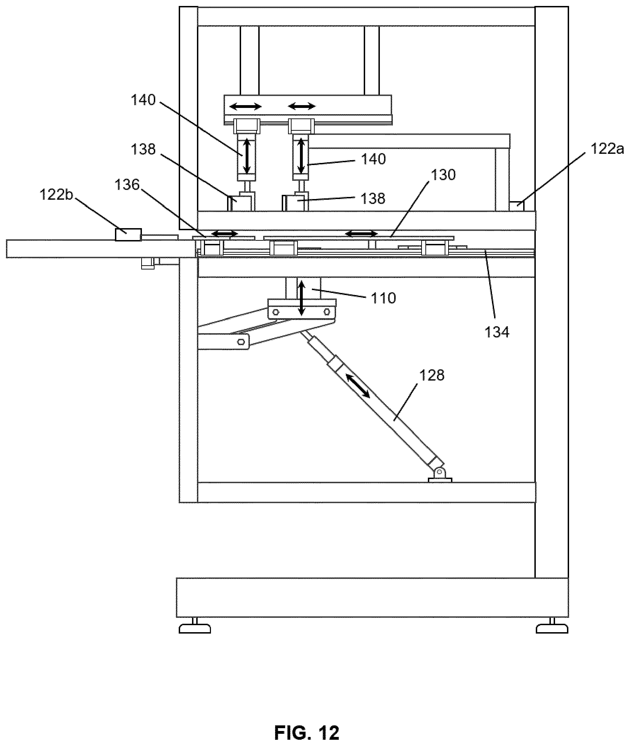

According to a particular embodiment shown in Figure 12, the machine of the welding station comprises a heating plate (110), means for lifting/lowering the heating plate, means for advancing/pressing the body, means for advancing/pressing the donor window, means for securing the body, means for securing the donor window, longitudinally movable stops (122a, 122b), means for unfolding the body, and means for anchoring the body, as explained below:
▪ The heating plate (110) has a curved shape. According to a particular embodiment, the heating plate (110) is formed, like a sandwich, by two, preferably steel, half-plates between which one or more resistors are housed, providing the heat required for welding. Each half-plate has a working face, which is located facing the outside of the sandwich such that, during welding, it comes into contact with the material of the borders to be welded; and a resistor face, which is located facing the inside of the sandwich. The working face of a half-plate has a concave shape and the face of the other half-plate has a convex shape. Preferably, the working faces are coated with Teflon to prevent the material of the borders to be welded from sticking during heating.
▪ The means for lifting/lowering the heating plate allow moving the heating plate (110) up or down according to interest. Preferably, the means for lifting/lowering the heating plate are formed by a plate actuator cylinder (128).
▪ The means for advancing/pressing the body cause the body (4) to advance and to first press against the heating plate (110), and then against the donor window (16), to perform welding. Preferably, the means for advancing/pressing the body comprise a body support platform (130) on which a part of the body is supported (specifically the wall having the gap (8)), and an advancing/pressing actuator cylinder (132) that controls the movement of this platform. The body support platform (130) can move longitudinally along a linear guide (134).
▪ The means for advancing/pressing the donor window cause the donor window (16) to advance and to first press against the heating plate (110), and then against the body (4), to perform welding. Preferably, the means for advancing/pressing the donor window comprise a donor window support platform (136) on which the donor window (16) is supported, and an advancing/pressing actuator cylinder (132') that controls the movement of this platform. The donor window support platform (136) can move longitudinally along the linear guide (134).
▪ The means for securing the body allow securing the body (4) (specifically the wall having the gap (8)) with respect to the means for advancing/pressing the body. Preferably, the means for securing the body comprise a hold-down platform (138), which acts as a result of action of a securing actuator cylinder (140).
▪ The means for securing the donor window allow securing the donor window (16) with respect to the means for advancing/pressing the donor window. Preferably, the means for securing the body comprise a hold-down platform (138), which acts as a result of the action of a securing actuator cylinder (140).
▪ The movable stops (122a, 122b) limit the positioning of the donor window (16) and of the body at one of the respective ends thereof. Preferably, there is a specific stop for the donor window and a specific stop for the body.
▪ The means for unfolding the body are intended for securing the body (4) of the container by the wall opposite the gap (8), for lifting said wall such that the body (4) is completely or partially unfolded, and for placing the body (4) in the welding area of the machine, prepared to be welded to the donor window (16). Preferably, the means for unfolding the body comprise a vacuum suction cup (102) hanging from a hoist (104), as shown in Figures 13 and 14.
▪ The means for anchoring the body allow securing the body (4) in a centered position for welding. Preferably, the means for anchoring comprise two laterally movable centering anchorings (106), one on each side of the machine, as shown in Figure 13. Each centering anchoring (106) includes a notch (108) the width of which adapts to the thickness of the wall of the body.

### Application example

An application example of the present invention comprising a scrap cutting station (see Figure 2), a sealing and hinging station (see Figures 4, 5, and 6), an additional cutting station (see Figure 8), and a welding station (see Figure 12), is included below .
The following is performed in the scrap cutting station:
- A scrap body is collected, cut transversely along one of the folds (32), and unfolded in the form of a sheet (34). Figure 3a) shows the sheet (34) obtained.
- It is again cut transversely along another fold (32) to make two equal halves. Figure 3b) shows the two halves obtained.
- A movable stop (48) of the cutting bench is arranged at a specific width (for example, 500 mm), and pieces of "healthy" material with that width are gradually removed (removed from scrap areas which are in good conditions).
- Once the widthwise cutting of the pieces is performed, lengthwise cutting is performed (for example, at 810 mm), and the window cutout (52) (donor according to Figure 3b) is thus obtained.

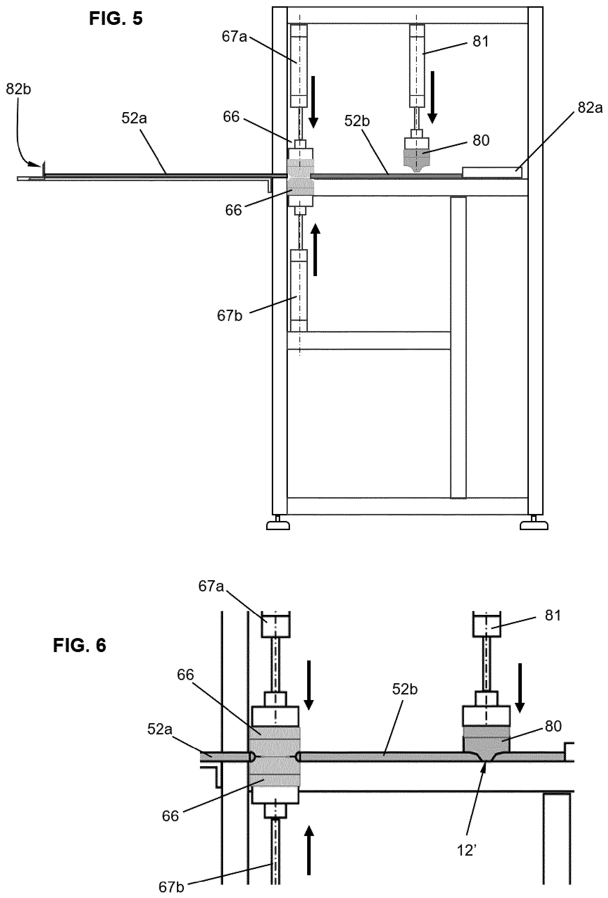

The following is performed in the sealing and hinging station:
- The machine in the station is put into operation, waiting for some time until the heated sealing profiles (66) and the heated hinging profile (80) acquire the desired temperature.
- A first window cutout (52a) (obtained in the scrap cutting station) is placed in an inner area of the machine. It is arranged transversely with respect to the machine, against a stop a (82a), located in the rear part of the machine, as shown in Figure 4.
- The heated sealing profiles (66) act (the upper sealing cylinder (67a) moves down and the lower sealing cylinder (67b) moves up) and the heated hinging profile (80) (the hinging cylinder (81) moves down onto the window cutout (52)). The heated sealing profiles (66) act at selected temperatures, pressures, and times. After the action of the profiles, the hinge fold (12') and the seal on a longitudinal border of the first window cutout (52a), are formed, as shown in Figure 7b).
- The first window cutout (52a) is turned 90 degrees (see Figures 7b and 7c), and placed in an outer area of the machine on a sealing platform. It is arranged longitudinally against a stop b (82b), located in the front part of the machine. In the case where it is necessary to act on a second window cutout (52b) (obtained in the scrap cutting station), the second window cutout (52b) is placed in the inner area of the machine, as indicated above in relation to the first window cutout (52a).
- The heated sealing profiles (66) act on the first window cutout (52a) and the heated hinging profile (80) acts simultaneously on the second window cutout (52b) (they act at selected temperatures, pressures, and times), as shown in Figures 5 and 6. After the action of the profiles, the hinge fold (12') and the seal on a longitudinal border of the second window cutout (52b), as well as the seal on a transverse border of the first window cutout (52a), are formed. The first window cutout (52a) was already sealed originally at the other transverse border (see original seal on the transverse border in Figure 7a), since it had been obtained from the edge of a sheet (34) of scrap that was already sealed. One of the longitudinal borders of the first window cutout (52a) already sealed in the inner area of the machine (see seal on the longitudinal border in Figure 7b). The longitudinal border remaining in the first window cutout (52a) is not sealed, as it will be subjected later on to the action of the additional cutting station to form the donor window welding contour (26). Therefore, at this point, the hinge fold (12') and the necessary seals on the borders of the first window cutout (52a) are formed, as shown in Figure 7d).
- The first window cutout (52a) is removed. The second window cutout (52b) is turned 90 degrees and placed in the outer area of the machine, as indicated above in relation to the first window cutout (52a). The heated sealing profiles (66) act on the second window cutout (52b).
In summary: Each new cutout first passes through the inner area and then through the outer area of the machine, being subjected to the action of the corresponding profiles, as explained. The machine can act simultaneously on two different cutouts, such that while one cutout is in the inner area for making the hinge fold (12') and sealing a border, the other cutout is in the outer area for sealing another border.
The following is performed in the additional cutting station:
The machine in the additional cutting station performs the curved cutting of both the donor window (16) and the space of the body (4) of the container where the donor window (16) will be housed. Cutting of the donor window (16) and of the space of the body (4) are performed in different cycles.

Cutting of the donor window (16) is performed in the following manner:
- The donor window (16) is introduced in the machine and brought forward to a moveable window stop (96a) located in the front part of the machine.
- Once the donor window (16) is positioned, the actuator cylinder of the cutting blade is activated, such that the cutting blade (92) moves down and performs curved cutting, forming the donor window welding contour (26).

Cutting of the body (4) is performed in the following manner:
- The body (4) is placed in the proximity of the machine with the wall of the gap (8) ("front wall" in the present application example) horizontal, below the opposite wall ("rear wall" in the present application example), such that the gap (8) is located facing the ground and forward.
- A manual vacuum suction cup (102) is placed (the vacuum suction cup hangs from a hoist (104)) in the rear wall, and the suction cup (102) is activated.
- The rear wall is lifted by means of the action of the hoist (104) such that the body (4) is unfolded.
- The unfolded body (4) is moved towards the machine with the help of the hoist (104), with the area of the gap (8) being in the inside of the machine and the rest of the body (4) being on the outside of the machine.

- The body (4) is brought backwards to a movable body stop (96b), located in the rear part of the machine.
- The body (4) is centered by coupling it in two centering anchorings (106).
- Once the body (4) is positioned, the actuator cylinder of the cutting blade is activated, such that the cutting blade (92) moves down and performs curved cutting, forming the body welding contour (28). Since the body (4) is unfolded, its inner space is formed, allowing the body (4) to be located in the machine such that the cutting blade (92) is located in the inner space of the body and acts exclusively in the target area, without affecting other parts of the body (4).

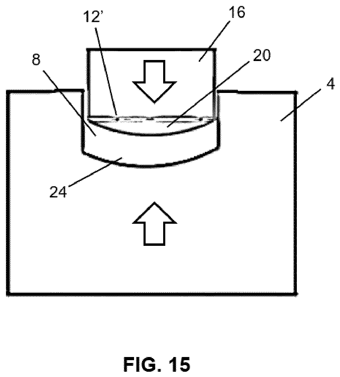

It is not necessary to have any order for cutting the donor window (16) and the body (4) to then weld them. Work can be performed in series, for example, making the series of bodies and making the series of donor windows another time.
An elevational plan profile view of the cutting blade (92) can be seen in the figure 9. The donor window (16) and the body (4) of the container, respectively, after it has gone through the additional cutting station, can be seen in Figures 10 and 11.
The following is performed in the welding station:
   - The machine in the station is put into operation, waiting for some time until the heating plate (110) acquires the desired temperature. In the cycle start position, the machine is on standby. Specifically, the securing actuator cylinders (140) are retracted in an upper position; the advancing/pressing actuator cylinders are retracted; and the plate actuator cylinder (128) is retracted in a lower position, such that the plate is moved down.
   - The body (4) of the container is placed in the proximity of the machine and unfolded by means of a vacuum suction cup (102) (the vacuum suction cup hangs from a hoist (104)), as shown in Figure 13. The body (4) is moved towards the machine with the help of the hoist (104), the body (4) is brought backwards (see Figure 14) until a movable body stop (122a) located in the rear part of the machine, and the body (4) is centered, all this in the same way as described in reference to the additional cutting station. The body (4) is positioned such that the wall of the gap (8) is located on a body support platform (130) which can move longitudinally along a linear guide (134) towards the front part or towards the rear part of the machine.
   - The donor window (16) is introduced in the machine and brought forward until a moveable window stop (122b) located in the front part of the machine. The donor window (16) is positioned on a donor window support platform (136) which can move longitudinally along the linear guide (134) towards the front part or towards the rear part of the machine.
   - Once the body (4) and the donor window (16) are positioned, the cycle of the machine is started according to the following actions:
      ▪ The securing actuator cylinders (140) and, accordingly, the respective hold-down platforms (138), move down, such that they secure the body (4) and the donor window (16) with respect to the respective support platforms (130, 136).
      ▪ The curved heating plate (110) moves up as a result of the action of the plate actuator cylinder (128).
      ▪ The advancing/pressing actuator cylinders emerge, such that they move the support platforms (130, 136) and, accordingly, the donor window (16) and the body (4) held thereon. The actuator cylinders cause the donor window welding contour (26) and the body welding contour (28) to press against the heating plate (110), one on each side of the plate, for the programmed time.
      ▪ Once the programmed pressing time elapsed, the advancing/pressing actuator cylinders are retracted, causing the donor window (16) and the body (4) to separate from the heating plate (110); and the heating plate (110) moves down as a result of the action of the plate cylinder.
      ▪ Once the heating plate (110) is moved down, the advancing/pressing actuator cylinders are operated again, pressing the donor window welding contour (26) against the body welding contour (28) for the programmed time, thereby performing welding (see the schematic depiction of this process in Figure 15).
      ▪ Once the welding time has elapsed, the securing actuator cylinders (140) are retracted, the respective hold-down platforms (138) moving up, such that the body (4) with the donor window (16) is free; and the advancing/pressing actuator cylinders are retracted.
      ▪ The repaired body (4) is removed and the machine remains in the cycle start position waiting to repeat the cycle again to weld another donor window to another body.

Although the present invention has been described in reference to particular options and embodiments thereof, those skilled in the art will be able to make modifications and variations to the preceding teachings without departing from the scope and spirit of the present invention.

## Claims

1. A method for repairing containers of the type that are used for transporting cargo and comprise:
- a base (2) supporting the weight of the cargo;
- a body (4), laterally enclosing the cargo and defining the cargo volume of the container, such that the body (4), together with the base (2), forms an inner space for housing the cargo;
- a gap (8) located in a wall of the body (4), starting from an upper edge of the body (4);
- an initial window (10) attached to the body (4) by a fold acting as a hinge, referred to as hinge fold (12), such that the window, in a closed position, is arranged in the gap (8), preventing access to the inside of the container and, in an open position, is lowered through the hinge fold (12), leaving access to the inside of the container free;
with the particularity that the initial window (10) in the container to be repaired is broken, the method being **characterized in that** it comprises the following actions:
- obtaining a new window with a hinge fold (12'), referred to as a donor window (16), including an additional area (20) projecting beyond the hinge fold (12'), with a donor window welding contour (26) being defined at the edge of the additional area (20);
- conditioning the area of the broken initial window (10) by means of a method comprising the following actions:
▪ in the case where the initial window (10) is not detached from the body (4), detaching the initial window (10) from the body (4) as a prior action;
▪ forming an additional space (24) next to the space of the broken initial window (10), generating a body welding contour (28) with the same shape as the donor window welding contour (26);
- incorporating the donor window (16) in the space of the initial window (10) and attaching it to the body (4) of the container by welding the donor window welding contour (26) to the body welding contour (28).

2. The method according to the preceding claim, wherein the containers to be repaired are made of alveolar polypropylene, wherein the donor window (16) is obtained by means of a method comprising the following actions:
- obtaining a rectangular alveolar polypropylene sheet;
- sealing open borders of the sheet;
- making the hinge fold (12') in a fringe of the sheet;
- forming a curve-shaped donor window welding contour (26).

3. The method according to claim 2, wherein:
- the rectangular sheet is obtained by means of manufacturing same by cutting a scrap body of another container;
- the sealing of borders of the sheet is performed by applying pressure and heat by means of the joint action of two heated profiles along the corresponding border, with one of the heated profiles acting on the upper part and the other one acting on the lower part of the border, like a sandwich, with the particularity that the shape of both profiles causes the border to be sealed completely when they are brought together and heat is applied;
- the hinge fold (12') is made by flattening the alveolar polypropylene, applying pressure and heat by means of a heated profile;
- the donor window welding contour (26) is made by means of cutting as a result of the action of a curve-shaped cutting blade (92).

4. The method according to any of claims 2 or 3, wherein the sealing of a border of the sheet and the hinge fold (12') are performed simultaneously.

5. The method according to any of the preceding claims, wherein the body welding contour (28) is formed by means of cutting as a result of the action of a curve-shaped cutting blade (92).

6. The method according to any of the preceding claims, wherein the attachment of the donor window (16) to the body (4) of the container is performed by means of a method comprising the following actions:
- pressing the donor window welding contour (26) and the body welding contour (28) of the container against a heating plate (110) for such a time that the material in the welding contours (26, 28) melts partially, with one of the contours acting on one side of the heating plate (110) and the other one acting on the opposite side of the heating plate (110), like a sandwich;
- separating the welding contours (26, 28) from the heating plate (110);
- pressing the donor window welding contour (26) and the body welding contour (28) of the container to one another for such a time that the material of the contours solidifies and the weld is formed.

7. The method according to claims 5 and 6, wherein the body (4) of the container is formed by four walls, specifically a front wall, a rear wall opposite the front wall, and two foldable side walls that allow folding the body (4) in order to reduce its volume, with the particularity that the body (4) is partially or completely unfolded using means for unfolding the body, as an action prior to cutting the body welding contour (28), and as an action prior to attaching the donor window (16) to the body (4) of the container.

8. A system for repairing containers of the type that are used for transporting cargo and comprise:
- a base (2) supporting the weight of the cargo;
- a body (4), laterally enclosing the cargo and defining the cargo volume of the container, such that the body (4), together with the base (2), forms an inner space for housing the cargo;
- a gap (8) located in a wall of the body (4), starting from an upper edge of the body (4);
- a window attached to the body (4) by a fold acting as a hinge, referred to as hinge fold (12), such that the window, in a closed position, is arranged in the gap (8), preventing access to the inside of the container and, in an open position, is lowered through the hinge fold (12), leaving access to the inside of the container free;
with the particularity that the initial window (10) in the container to be repaired is broken, the system being **characterized in that** it comprises:
- means for forming a new window with a hinge fold (12'), referred to as a donor window (16), such that the donor window (16) includes an additional area (20) projecting beyond the hinge fold (12'), with a donor window welding contour (26) being defined at the edge of the additional area (20);
- means for forming an additional space (24) in the body (4) next to the space of the broken initial window (10), generating a body welding contour (28) with the same shape as the donor window welding contour (26);
- means for incorporating the donor window in the space of the initial window (10) and attaching it to the body (4) of the container by welding the donor window welding contour (26) to the body welding contour (28).

9. The system according to claim 8, wherein the means for forming a donor window comprise:
- a circular saw (44) intended for making sheet-like cutouts (34) from scrap material;
- two heated sealing profiles (66) intended for acting, in an aligned manner, one at the upper part and the other one at the lower part of a border to be sealed, like a sandwich, applying pressure and heat, with the particularity that the shape of both profiles causes the border to be sealed completely when they are brought together;
- a heated hinging profile (80) intended for acting on a fringe of a cutout, applying pressure and heat, such that the hinge fold (12') of the donor window (16) is formed by flattening the material of the cutout;
- a curve-shaped cutting blade (92) intended for making the donor window welding contour (26).

10. The system according to any of claims 8 or 9, wherein the means for forming the additional space (24) in the body (4) comprise a curve-shaped cutting blade (92) intended for making the body welding contour (28).

11. The system according to claims 9 and 10, wherein the cutting blade (92) that makes the body welding contour (28) is the same cutting blade that makes the donor window welding contour (26).

12. The system according to any of claims 9 to 11, wherein the means for incorporating the donor window in the space of the initial window (10) and attaching it to the body (4) of the container comprise:
- means for advancing/pressing the body and the donor window;
- means for securing the body and the donor window;
- a heating plate (110) with the same curved shape as the cutting blade (92) that makes the donor window welding contour (26) and the body welding contour (28);
- means for lifting/lowering the heating plate.

13. The system according to claim 12, wherein:
- the means for advancing/pressing the body and the donor window comprise respective support platforms (130, 136) on which the respective body and the respective donor window are supported; and respective actuator cylinders controlling the movement of the respective support platforms (130, 136);
- the means for securing the body and the donor window comprise respective hold-down platforms (138) acting on the respective body and the respective donor window as a result of the action of respective actuator cylinders;
- the means for lifting/lowering the heating plate are formed by an actuator cylinder.

14. The system according to claims 9, 11, and 13, wherein:
- the circular saw (44) is integrated in a machine of a scrap cutting station;
- the two heated sealing profiles (66) and the heated hinging profile (80) are integrated in a machine of a sealing and hinging station;
- the cutting blade (92) is integrated in a machine of an additional cutting station;
- the support platforms (130, 136), the hold-down platforms (138), the heating plate (110), the means for lifting/lowering the heating plate, and the actuator cylinders are integrated in a machine of a welding station.

15. The system according to claim 14, wherein the additional cutting station and the welding station each comprises:
- means for unfolding the body, intended for securing the body (4) of the container by a wall opposite the gap (8), for lifting said wall such that the body (4) is completely or partially unfolded, and for placing the body (4) in the welding area of the machine, the means for unfolding the body comprising a vacuum suction cup (102) hanging from a hoist (104);
- means for anchoring the body, intended for securing the body (4) in a centered position, the means for anchoring comprising two laterally movable centering anchorings (106), one on each side of the machine of the corresponding station, each centering anchoring (106) including a notch (108) the width of which adapts to the thickness of the wall of the body (4).
